# NEUE EUROPÄISCHE PATENTSCHRIFT

(11) **EP 0 556 713 B2**
(45) Veröffentlichungstag und Bekanntmachung des Hinweises auf die Entscheidung über den Einspruch: **28.06.2000**
(45) Hinweis auf die Patenterteilung: 14.09.1994
(21) Anmeldenummer: 93102116.6
(22) Anmeldetag: 11.02.1993
(51) Int. Cl.: B25D 17/08, B23Q 3/12

(54) **Einrichtung zum Werkzeugwechsel an einer handgeführten Werkzeugmaschine**
Tool change device on a hand-held machine-tool
Dispositif de changement d'outil d'une machine-outil à main

(30) Priorität: 21.02.1992 DE 4205259
(43) Veröffentlichungstag der Anmeldung: 25.08.1993
(73) Patentinhaber: ATLAS COPCO ELEKTROWERKZEUGE GmbH, 71364 Winnenden (DE)
(72) Erfinder: Vögele, Roland, Dipl.-Ing. (FH), W-7057 Winnenden 11 (DE); Hirt, Dieter, Dipl.-Ing. (FH), W-7057 Winnenden 4 (DE)
(74) Vertreter: Gaiser, Hartmut, Dipl.-Ing.

(56) Entgegenhaltungen:
- EP-A- 0 175 088
- EP-A- 0 265 380
- EP-A- 0 298 027
- DE-A- 3 028 309
- DE-A- 3 443 186
- DE-A- 4 010 239
- DE-U- 8 901 367
- Verkausprospekt BOSCH-Elektrowerkzeuge 1986/87

## Beschreibung

Die Erfindung betrifft eine Einrichtung zum Werkzeugwechsel an einer handgeführten Bohrhammermaschine zum wahlweisen Betrieb mit einem Hammerbohrer oder einem anderen Werkzeug, wie Bohr- oder Schraubbit, mit den Merkmalen des Oberbegriffs des Anspruchs 1.

Eine derartige Einrichtung ist in der EP 0 298 027 A2 beschrieben. Diese Einrichtung ist in verschiedener Hinsicht verbesserungsbedürftig. Insbesondere ist dort kein schneller Werkzeugwechsel möglich.

Eine ähnliche Einrichtung ist in der DE 34 09 494 C2 bei einer Bohrhammermaschine beschrieben. In die Werkzeugaufnahme lassen sich Normalbohrer oder Hammerbohrer einsetzen. Die Werkzeugaufnahme ist insgesamt eine Baugruppe. Sie ist aufgrund der verschiedenen in ihr integrierten Möglichkeiten aufwendig. Ihre Rundlaufeigenschaft scheint verbesserungsfähig.

Zum Wechsel der Werkzeuge ist die Werkzeugaufnahme bei der DE 34 09 494 C2 nicht von der Bohrhammermaschine abnehmbar. Soll ein Hammerbohrer gegen einen Normalbohrer ausgetauscht werden, dann ist letztere mittels eines Bohrfutterschlüssels festzusetzen. Dies verlängert die zum Werkzeugwechsel notwendige Zeit.

In der DE 34 05 102 C2 ist eine der DE 34 09 494 C2 ähnliche Einrichtung beschrieben.

In der DE 38 28 309 A1 ist ein Bohrhammer beschrieben, in dessen Führungsrohr verschiedene Werkzeugaufnahmen einsetzbar sind. Die beiden beschriebenen Werkzeugaufnahmen sind jedoch mit unterschiedlichen Mitteln an dem Führungsrohr festzulegen.

Im einen Fall ist die als Backenfutter ausgebildete Werkzeugaufnahme mittels Verriegelungskugeln, die in Bohrungen der Werkzeugaufnahme und in Durchbrechungen des Führungsrohres liegen, gehalten. Die Kugeln sind durch einen Ring radial blockiert, der sich axial verschieben läßt. Der Ring ist von außen verdeckt und schwer zugänglich. Die Demontage der Werkzeugaufnahme ist nicht beschrieben. Jedenfalls ist sie nicht einfach und die Kugeln können nach der Demontage herausfallen.

Im zweiten Fall ist die Werkzeugaufnahme mit radialen Fortsätzen und einem verdeckten Stift mit dem Führungsrohr verbunden. Zur Demontage muß der Stift gezogen werden. Er ist dann verlierbar.

In der EP 0 448 801 A1 ist ein Bohrhammer mit abnehmbarer Werkzeugaufnahme beschrieben. Die Werkzeugaufnahme ist an einer Spindelhülse mittels Kugeln gelagert, die in Ausnehmungen der Werkzeugaufnahme und in Bohrungen der Spindelhülse durch einen drehbaren, jedoch axial festen Ring gehalten sind, der mit öffnungen versehen ist. Der Ring liegt innerhalb eines Spannhalses. Zur Demontage der Werkzeugaufnahme muß der Ring durch den Spannhals hindurch gehalten werden. Nach einer Drehung müssen die Kugeln dann von außen entnommen werden. Hierfür ist beispielsweise ein Stabmagnet erforderlich. Dies ist umständlich und die Kugeln können verlorengehen.

Aufgabe der Erfindung ist es, eine Einrichtung der eingangs genannten Art vorzuschlagen, bei der ein schneller Werkzeugwechsel auch bei Hammerbohrern mit verschiedenen Aufnahmeschäften möglich ist und ein sicherer Rundlauf des Werkzeugs gewährleistet ist.

Erfindungsgemäß ist obige Aufgabe bei einer Einrichtung der eingangs genannten Art dadurch die Merkmale des Anspruchs 1 gelöst.

Ein schneller Werkzeugwechsel ist möglich, da hierfür nur der Adapter mit dem Werkzeug abgenommen und ein das andere Werkzeug tragender weiterer Adapter in die Spindelhülse eingesteckt werden muß. Beides geschieht ohne Hilfsmittel, wie beispielsweise Schlüssel. Die Außenhülse wird zum Werkzeugwechsel an ihrer Außenseite mit einer Hand ergriffen und manuell verschoben. Andere Teile der Einrichtung müssen nicht abgenommen werden, so daß sie auch nicht verlorengehen können.

Ein sicherer Rundlauf ist gewährleistet, weil der Adapter mit einer Führungsfläche in die Spindelhülse eingreift und mittels der Verriegelungskörper drehfest an der Spindelhülse gehalten ist.

Der Aufbau der Einrichtung ist vergleichsweise einfach, da nicht alle Besonderheiten der möglichen Werkzeuge in die gleiche Baueinheit integriert sein müssen. Beispielsweise läßt sich ein Adapter mit einem Schnellspannfutter für Normalbohrer und ein Adapter mit einer SDS-Aufnahme für Hammerbohrer sowie ein weiterer Adapter mit SW 13 (Schlüsselweite)-Aufnahme bereitstellen. Für jeden Typ von Aufnahmeschaft läßt sich ein spezieller Adapter vorsehen. In allen Fällen ist der jeweils verwendete Adapter mit den gleichen Mitteln, nämlich den genannten Verriegelungskörpern, an der Spindelhülse gehalten.

Günstig ist auch, daß ein staubgeschützter Aufbau ohne weiteres möglich ist.

In bevorzugter Ausgestaltung der Erfindung ist in der Spindelhülse eine Innenhülse axial verschieblich angeordnet, die mittels eines Anschlagrandes des Adapters von einer ersten Verschiebestellung in eine zweite Verschiebestellung bringbar ist und die in der ersten Verschiebestellung den bzw. die Verriegelungskörper in die Außenhülse drückt und dadurch diese in ihrer Freigabestellung blockiert. Nach dem Herausziehen des Adapters bleibt die Außenhülse in der Verschiebestellung, so daß diese beim Einschieben des Adapters nicht manuell bewegt werden muß. Beim Einschieben des Adapters drückt dieser die Innenhülse zurück, so daß dann die Verriegelungskörper in dessen Vertiefungen gelangen können. Um dies zu erleichtern, ist eine Drehbarkeit gegeben.

Vorzugsweise ist die Innenhülse durch eine Feder belastet, die sie aus der zweiten Verschiebestellung in die erste Verschiebestellung bringt. Dabei ist vorzugsweise die Feder so dimensioniert, daß sie in der Freigabestellung der Außenhülse den Adapter aus der Spindelhülse schiebt.

Um trotz vergleichsweise großer Führungsflächen, am Adapter die Baulänge der Werkzeugmaschine nicht erheblich zu vergrößern, greift der Adapter über eine in der Spindelhülse angeordnete Döpperfanghülse.

Die Erfindung kann nicht nur bei Bohrhammermaschinen, sondern auch bei Schlagbohrmaschinen, Bohrmaschinen oder Schraubern verwendet werden.

Weitere vorteilhafte Ausgestaltungen der Erfindung ergeben sich aus den Unteransprüchen und der folgenden Beschreibung eines Ausführungsbeispiels. In der Zeichnung zeigen:
Figur 1 einen Teilschnitt einer Bohrhammermaschine und einen Adapter zur Aufnahme eines Hammerbohrers,
Figur 2 einen Adapter mit einem Schnellspannfutter für einen Bohrer,
Figur 3 die Stirnansicht eines Adapters für SDS-plus Hammerbohrer und
Figur 4 die Stirnansicht eines Adapters für SW 13-Hammerbohrer.

An einer elektropneumatischen Bohrhammermaschine ist ein Schlagkörper (1) axial verschieblich geführt. Diesem wird über einen nicht näher dargestellten Antriebskolben eine Hin- und Herbewegung vermittelt. Der Schlagkörper (1) überträgt seine Bewegungsenergie auf einen Döpper (2), der in einer Döpperfanghülse (3) gelagert ist. Eine Spindelhülse (4), in der konzentrisch der Schlagkörper (1), der Döpper (2) und die Döpperfanghülse (3) angeordnet sind, ist über einen Zahnkranz (5) rotatorisch antreibbar.

Im Bereich des äußeren Endes der Spindelhülse (4) sind an dieser am Umfang gleich verteilt drei oder mehr Durchbrechungen (6) vorgesehen. Im Grenzfall könnte auch eine Durchbrechung genügen. In jeder Durchbrechung (6) liegt als Verriegelungskörper eine Kugel (7). Die Kugeln (7) liegen innerhalb einer Außenhülse (8), welche aus einer Deckkappe (9) und einem in diese eingesetzten Ring (10) besteht. Der Ring (10) ist mit einer Druckfeder (11) belastet, die sich an einem Anschlag (12) an der Spindelhülse (4) abstützt.

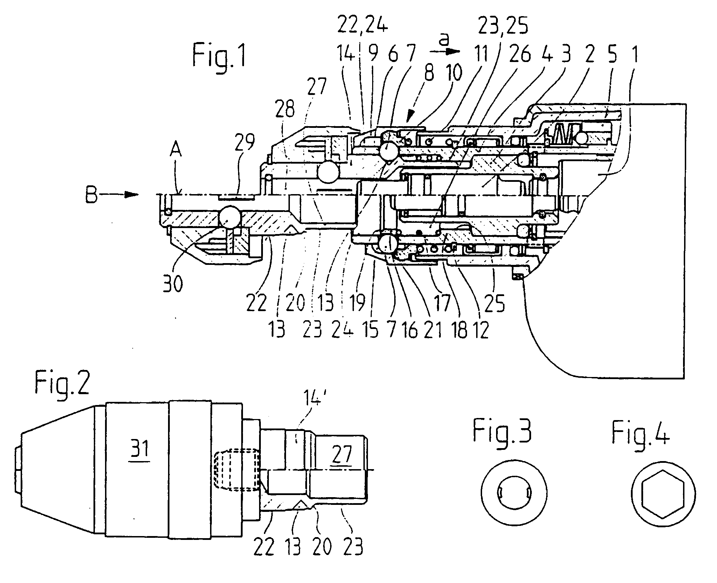

In Figur 1 ist oberhalb der Achse (A) die Außenhülse (8) in ihrer Verriegelungsstellung gezeigt. In dieser Stellung hält der Ring (10) die Kugeln (7) jeweils in einer konischen Vertiefung (13) eines Adapters (14). Der Adapter (14) weist an seinem Umfang für jede der Kugeln (7) wenigstens eine konische Vertiefung (13) auf, die an die Kugel (7) angepaßt ist.

In Figur 1 ist unterhalb der Achse (A) die Außenhülse (8) in ihrer manuell zurückgezogenen Stellung gezeigt. Die Kugeln (7) liegen in einer Tasche (15) der Deckkappe (9).

In der Spindelhülse (4) ist eine Innenhülse (16) gelagert. Diese ist mittels einer Druckfeder (17) belastet, die sich an einem Innenbund (18) der Spindelhülse (4) abstützt. Die Innenhülse (16) weist einen Stirnrand (19) auf, der einem Anschlagrand (20) des Adapters (14) zugeordnet ist.

In Figur 1 ist unterhalb der Achse (A) die erste Verschiebestellung der Innenhülse (16) gezeigt. In dieser Stellung drückt die Innenhülse (16) die Kugeln (7) in die Taschen (15). Eine Kante (21) des Ringes (10), die an den Kugeln (7) ansteht, verhindert dabei, daß die Außenhülse (8) aus ihrer Freigabestellung in die Verriegelungsstellung geht.

In Figur 1 ist oberhalb der Achse (A) die Innenhülse (16) in ihrer zweiten Verschiebestellung gezeigt. In dieser ist sie vom Anschlagrand (20) des Adapters (14) gehalten.

Der Adapter (14) weist angrenzend an die Vertiefungen (13) und den Anschlagrand (20) zylindrische Führungsflächen (22,23) auf. Diese liegen - bei eingeschobenem Adapter - eng an inneren Führungsflächen (24,25) der Spindelhülse (4). Zur Verbesserung der Führung können die Führungsflächen geschliffen sein. Im Bereich der Führungsfläche (25) weist die Dopperfanghülse (3) außen eine Aussparung (26) auf. In diese greift der außen die Führungsfläche (23) aufweisende zylindrische Endbereich (27) des Adapters (14) ein. Dadurch ist erreicht, daß trotz großer Führungsflächen (22,23) des Adapters (14) die Baulänge der Maschine nicht entsprechend vergrößert werden muß (vgl. Figur 1, oben).

Der Adapter (14) der Figur 1 ist mit einer üblichen SDS-plus-Aufnahme (28) für Hammerbohrer versehen. Die Aufnahme (28) weist Nasen (29) und Rastkugeln (30) auf.

Der Adapter (14') der Figur 2 ist hinsichtlich der Vertiefungen (13), des Anschlagrandes (20) und der Führungsflächen (22,23) ebenso ausgebildet wie der Adapter der Figur 1. Er trägt jedoch im Beispielsfall ein Schnellspannfutter (31) für Drehbohrer. Weitere Adapter für Hammerbohrer, beispielsweise mit SW 13-Schaft (vgl. Figur 4) sind ähnlich aufgebaut, wie der SDS-plus-Adapter.

Die Funktionsweise der beschriebenen Einrichtung ist etwa folgende:
Bei der in Figur 1 oben dargestellten Stellung greifen die Kugeln (7) in die Vertiefungen (13) des Adapters (14) und sind in diesen mittels des Rings (10) gehalten. Der Adapter (14) ist dadurch drehfest und axial fest mit der Spindelhülse (4) verbunden. Die Führungsflächen (22,24; 23,25) gewährleisten einen gleichmäßigen Rundlauf des Adapters (14). Ein in die Aufnahme (28) eingesetzter Hammerbohrer wird im Betrieb gedreht und vom Döpper (2) beaufschlagt.

Soll der den Hammerbohrer tragende Adapter (14) ausgetauscht werden, dann wird die Außenhülse (8) an ihrer Deckkappe (9) manuell in Richtung des Pfeiles a nach hinten, gegen die Kraft der Druckfeder (11) verschoben. Dadurch gelangt die Tasche (15) über die Kugeln (7), so daß diese nicht mehr in den Vertiefungen (13) blockiert sind. Unter der Wirkung der Druckfeder (17) verschiebt nun die Innenhülse (16) den Adapter (14) an seinem Anschlag (20) nach außen - entgegen der Richtung des Pfeiles a und die konischen Vertiefungen (13) schieben die Kugeln (7) radial nach außen in die Tasche (15). Die Innenhülse (16) gelangt vor die Durchbrechungen (6) und sichert die Kugeln (7) in der Tasche (15). Der Adapter (14) kann nun ohne weiteres entnommen werden (vgl. Figur 1, unten).

Die Außenhülse (8) bleibt in ihrer Freigabestellung, da die kugeln (7) an der Kante (21) blockiert sind.

Anschließend kann der an seinem Schnellspannfutter (31) einen Bohrhammer tragende Adapter (14') der Figur 2 in die Maschine eingeschoben werden. Dabei trifft sein Anschlagrand (20) auf den Stirnrand (19) der Innenhülse (16). Diese wird dann beim Einschieben in Richtung des Pfeiles a entgegen der Kraft der Druckfeder (17) zurückgeschoben, so daß sie die Durchbrechungen (6) verläßt. Es wird dann die Außenhülse (8) oder der Adapter (14') so um die Achse (A) gedreht, daß die Kugeln (7) den Vertiefungen (13) gegenüberstehen. Sie schnappen unter der Wirkung der Druckfeder (11) dann in die Vertiefungen (13) und die Außenhülse (8) geht dabei in ihre Verriegelungsstellung (entgegen der Richtung des Pfeiles a). Dies ist für den Benutzer erkennbar, so daß er sicher ist, daß der Adapter richtig in der Maschine sitzt.

## Patentansprüche

1. Einrichtung zum Werkzeugwechsel an einer handgeführten Bohrhammermaschine zum wahlweisen Betrieb mit einem Hammerbohrer oder einem anderen Werkzeug, wie Bohrer oder Schraubbit,
bei der für den Drehantrieb eine Spindelhülse(4) vorgesehen ist, in der ein dem Schlagantrieb dienender Döpper(2) angeordnet ist und
bei der in wenigstens einer Durchbrechung(6) der Spindelhülse(4) ein deren Drehung mitmachender Verriegelungskörper(7) gelagert ist,
dadurch gekennzeichnet,
daß ein zum Betrieb nötiger Adapter(14,14'), an dem das Werkzeug festlegbar ist, mit einer Führungsfläche(22,23) in die Spindelhülse(4) der Bohrhammermaschine axial einsteckbar ist,
daß der Adapter(14,14') zur drehfesten und axial festen Verbindung mit der Spindelhülse(4) wenigstens eine Vertiefung(13) für jeden Verriegelungskörper(7) aufweist,
daß für den Adapteraustausch an der Spindelhülse(4) der Bohrhammermaschine eine nach außen freiliegende Außenhülse(8) von einer Verriegelungsstellung in eine Freigabestellung (Pfeil a) manuell axial verschieblich gelagert ist,
daß die Außenhülse(8) in ihrer Verriegelungsstellung den bzw. die Verriegelungskörper(7) in der Vertiefung bzw. den Vertiefungen(13) des Adapters (14,14') blockiert und
daß die Außenhülse(8) in ihrer Freigabestellung den bzw. die Verriegelungskörper(7) freigibt und in der Außenhülse (8) eine Tasche(15) zur Aufnahme des bzw. der Verriegelungskörper(7) in der Freigabestellung ausgebildet ist,
wobei in der Freigabestellung ein einen Hammerbohrer tragender Adapter(14) anstelle eines ein Schnellspannfutter(31) tragenden Adapters(14') einsteckbar ist,
und wobei beim Adapteraustausch die Außenhülse(8) an der Spindelhülse(4) der Bohrhammermaschine bleibt,
und daß der jeweilige Adapter(14,14') die Führungsfläche(22,23) an einem zylindrischen Endbereich(27) aufweist, der wenigstens teilweise außen über den Döpper(2) greift.

2. Einrichtung nach Anspruch 1 , dadurch gekennzeichnet, daß in der Spindelhülse (4) eine Innenhülse (16) axial verschieblich angeordnet ist, die mittels eines Anschlagrandes (20) des Adapters (14) von einer ersten Verschiebestellung in eine zweite Verschiebestellung bringbar ist und die in der ersten Verschiebestellung den bzw. die Verriegelungskörper (7) in die Außenhülse (8) drückt und dadurch diese in ihrer Freigabestellung blockiert.

3. Einrichtung nach Anspruch 2, dadurch gekennzeichnet, daß die Innenhülse (16) durch eine Feder (17) belastet ist, die sie aus der zweiten Verschiebestellung in die erste Verschiebestellung bringt.

4. Einrichtung nach Anspruch 3, dadurch gekennzeichnet, daß die Feder (17) so dimensioniert ist, daß sie in der Freigabestellung der Außenhülse (8) den Adapter (14) aus der Spindelhülse (4) schiebt.

5. Einrichtung nach einem der vorhergehenden Ansprüche, dadurch gekennzeichnet, daß der Adapter (14) über eine in der Spindelhülse (4) angeordnete Döpperfanghülse (3) greift.

6. Einrichtung nach einem der vorhergehenden Ansprüche, dadurch gekennzeichnet, daß die Verriegelungskörper Kugeln (7) sind.

7. Einrichtung nach einem der vorhergehenden Ansprüche, dadurch gekennzeichnet, daß der Adapter (14) in der Spindelhülse (4) drehbar ist, bis die Verriegelungskörper (7) in die Vertiefungen (13) einschnappen.

8. Einrichtung nach einem der vorhergehenden Ansprüche, dadurch gekennzeichnet, daß die Außenhülse (8) unter der Wirkung einer Feder (11) steht.

9. Einrichtung nach einem der vorhergehenden Ansprüche, dadurch gekennzeichnet, daß in der Außenhülse (8) eine Kante (21) vorgesehen ist, an der sich die Verriegelungskörper (7) in der Freigabestellung der Außenhülse (8) abstützen.

10. Einrichtung nach einem der vorhergehenden Ansprüche, dadurch gekennzeichnet, daß die Vertiefungen (13) konisch sind.

## Claims

1. Tool change device on a hand-held hammer drill, for selective operation with a hammer drill or other tool, such as a drill or threaded bit,
wherein for rotary operation a spindle sleeve (4) is provided, in which a header (2) is provided for percussion operation and,
wherein in at least one hole (6) in the spindle sleeve (4) a locking member (7) following the rotation of said spindle sleeve is mounted,
characterised in that an adapter (14,14') required for the operation, to which the tool is fixable, is insertable axially into the spindle sleeve (4) of the hammer drill with a guide face (22,23),
that the adapter (14,14') has at least one recess (13) for each locking member (7) in order to provide non-rotational and axially fixed connection to the spindle sleeve (4),
that for the exchange of the adapter, on the spindle sleeve (4) of the hammer drill, there is mounted an externally exposed outer sleeve (8) that is manually axially displaceable from a locking position to a release position (arrow a)
that the outer sleeve (8) locks the locking member or members (7) in the recess or recesses (13) of the adapter (14,14') in its locking position,
that the outer sleeve (8) in its release position releases the locking member or members (7), and a pocket (15) for receiving the locking member or members (7) in the released position is formed in the outer sleeve (8),
whereby in the release position a hammer drill carrying adapter (14) is insertable in place of an adapter (14') carrying a rapidly tightening chuck (31),
and whereby upon exchange of the adapter the outer sleeve (8) remains on the spindle sleeve (4) of the hammer drill,
and that the respective adapter (14,14') comprises the guide surface (22,23) on a cylindrical end region (27) that engages at least partially outwardly over the header (2).

2. Device according to claim 1, characterised in that an inner sleeve (16) is axially displaceable in the spindle sleeve (4) and, by means of a stop edge (10) of the adapter (14), can be moved from a first displacement position to a second displacement position, and in the first displacement position pushes the locking member or members (7) into the outer sleeve (8) and thereby locks them in their release position.

3. Device according to claim 2, characterised in that the inner sleeve (16) is loaded by a spring (17), which moves said sleeve from the second displacement position into the first displacement position.

4. Device according to claim 3, characterised in that the spring (17) is so dimensioned that it pushes the adapter (14) out of the spindle sleeve (4) in the release position.

5. Device according to one of the preceding claims, characterised in that the adapter (14) extends through a header safety sleeve (3) disposed in the spindle sleeve (4).

6. Device according to one of the preceding claims, characterised in that the locking members are balls (7).

7. Device according to one of the preceding claims, characterised in that the adapter (14) is rotatable in the spindle sleeve (4) until the locking members (7) catch in the recesses (13).

8. Device according to one of the preceding claims, characterised in that the outer sleeve (8) is acted on by a spring (11).

9. Device according to one of the preceding claims, characterised in that an edge (21) is provided in the outer sleeve (8), on which edge the locking members (7) bear in the release position of the outer sleeve (8).

10. Device according to one of the preceding claims, characterised in that the recesses (13) are conical.

## Revendications

1. Dispositif pour le changement d'un outil sur une machine formant perceuse à percussion à guidage manuel pour le fonctionnement sélectif avec une perceuse à percussion ou avec un autre outil tel que foret simple ou hélicoïdal,
dans lequel est prévu pour l'entraînement rotatif une douille de broche (4), dans laquelle est disposée une bouterolle (2) servant à l'entraînement de percussion et
dans lequel est logé dans au moins un perçage (6) de la douille de broche (4) un corps de verrouillage (7) accompagnant la rotation de celle-ci,
caractérisé
en ce qu'un adaptateur (14, 14') nécessaire lors du fonctionnement, sur lequel peut être fixé l'outil, est enclenché axialement par une surface de guidage (22, 23) dans la douille de broche (4) de la perceuse à percussion,
en ce que l'adaptateur (14, 14') présente, pour une jonction axialement fixe et non rotative à la douille de broche (4) au moins un creux (13) pour chaque corps de verrouillage (7),
en ce qu'il est logé, de manière manuellement axialement déplaçable, pour l'échange de l'adaptateur sur la douille de broche (4) de la perceuse à percussion, une douille externe (8) dégagée vers l'extérieur, d'une position de verrouillage dans une position de déblocage (flèche a),
en ce que la douille externe (8), dans sa position de verrouillage, bloque le respectivement les corps de verrouillage (7) dans le creux respectivement les creux (13) de l'adaptateur (14, 14') et
en ce que la douille externe (8), dans sa position de déblocage, libère le respectivement les corps de verrouillage (7) et que, dans la douille externe (8), il est ménagé une poche (15) pour le logement du respectivement des corps de verrouillage en position de déblocage,
où dans la position de déblocage, un adaptateur (14) portant une perceuse à percussion peut être enclenché à la place d'un adaptateur (14') portant un mandrin à serrage rapide (31),
et où lors de l'échange de l'adaptateur, la douille externe (8) reste sur la douille de broche (4) de la perceuse à percussion,
et en ce que l'adaptateur respectif (14, 14') présente la face de guidage (22, 23) à une zone d'extrémité cylindrique (27) qui passe au moins partiellement à l'extérieur sur la bouterolle (2).

2. Dispositif selon la revendication 1, caractérisé en ce que dans la douille de broche (4) est disposée une douille interne (16) coulissante axialement qui, au moyen d'un bord de butée (20) de l'adaptateur (14), est amenée d'une première position coulissante dans une seconde position coulissante et qui presse dans la première position coulissante le resp. les corps de verrouillage (7) dans la douille externe (8) et les bloque ainsi dans leur position de déblocage.

3. Dispositif selon la revendication 2, caractérisé en ce que la douille interne (16) est soumise à l'action d'un ressort (17) qui l'amène d'une seconde position coulissante dans une première position coulissante.

4. Dispositif selon la revendication 3, caractérisé en ce que le ressort (17) est dimensionné de manière à pousser, en position de déblocage de la douille externe (8), l'adaptateur (14) hors de la douille de broche (4).

5. Dispositif selon l'une des revendications précédentes, caractérisé en ce que l'adaptateur (14) passe au-dessus d'une douille de positionnement (3) de la bouterolle disposée dans la douille de broche (4).

6. Dispositif selon l'une des revendications précédentes, caractérisé en ce que les corps de verrouillage sont des billes (7).

7. Dispositif selon l'une des revendications précédentes, caractérisé en ce que l'adaptateur (14) tourne dans la douille de broche (4) jusqu'à l'encliquetage des corps de verrouillage (7) dans les creux (13).

8. Dispositif selon l'une des revendications précédentes, caractérisé en ce que la douille externe (8) subit l'action d'un ressort (11).

9. Dispositif selon l'une des revendications précédentes, caractérisé en ce que dans la douille externe (8), il est prévu un bord (21) contre lequel prennent appui les corps de verrouillage (7) quand la douille externe (8) est en position de déblocage.

10. Dispositif selon l'une des revendications précédentes, caractérisé en ce que les creux (13) sont coniques.
